# EUROPÄISCHE PATENTSCHRIFT

(11) **EP 1 084 399 B1**
(45) Veröffentlichungstag und Bekanntmachung des Hinweises auf die Patenterteilung: **05.12.2001**
(21) Anmeldenummer: 99948567.5
(22) Anmeldetag: 09.04.1999
(51) Int. Cl.: G01N 27/419

(54) **VERFAHREN ZUR BESTIMMUNG DER NOX-KONZENTRATION**
METHOD FOR DETERMINING NOX CONCENTRATION
PROCEDE POUR LA DETERMINATION DE LA CONCENTRATION EN NOX

(30) Priorität: 30.04.1998 DE 19819581
(43) Veröffentlichungstag der Anmeldung: 21.03.2001
(73) Patentinhaber: SIEMENS AKTIENGESELLSCHAFT, 80333 München (DE)
(72) Erfinder: ZHANG, Hong, D-93057 Regensburg (DE); RÖSSLER, Jürgen, D-93053 Regensburg (DE)
(86) Internationale Anmeldenummer: DE9901090
(87) Internationale Veröffentlichungsnummer: WO9957556

(56) Entgegenhaltungen:
- EP-A- 0 769 694
- EP-A- 0 816 836
- EP-A- 0 831 322
- KATO NOBUHIDE ET AL: "Thick film ZrO2 NOx sensor for the measurement of low NOx concentration" PROCEEDINGS OF THE 1998 SAE INTERNATIONAL CONGRESS & EXPOSITION;DETROIT, MI, USA FEB 23-26 1998, Bd. 1356, Februar 1998 (1998-02), Seiten 69-77, XP002118676 SAE Spec Publ;SAE Special Publications; Electronic Engine Controls 1998: Sensors, Actuators, and Development Tools Feb 1998 SAE, Warrendale, PA, USA

## Beschreibung

Die Erfindung betrifft ein Verfahren zur Bestimmung der NOₓ-Konzentration in einem Gas, insbesondere im Abgas einer Brennkraftmaschine, gemäß dem Oberbegriff des Patentanspruchs 1.

Zur Messung der NOₓ-Konzentration in einem Gas, z.B. im Abgas einer Brennkraftmaschine, ist es bekannt, einen Dickschicht-Meßaufnehmer zu verwenden. Ein solcher Meßaufnehmer ist in der Veröffentlichung N. Kato et al., "Performance of Thick Film NOₓ Sensor on Diesel and Gasoline Engines", Society of Automotive Engineers, Veröffentlichung 970858, 1997 beschrieben. Dieser Meßaufnehmer weist zwei Meßzellen auf und besteht aus einem Sauerstoffionen-leitenden Zirkoniumoxid. Er verwirklicht folgendes Meßkonzept: In einer ersten Meßzelle, der das zu messende Gas über eine Diffusionsbarriere zugeführt wird, wird mittels eines ersten Sauerstoff-Ionen-Pumpstroms eine erste Sauerstoffkonzentration eingestellt, wobei keine Zersetzung von NOₓ stattfindet. In einer zweiten Meßzelle, die über eine Diffusionsbarriere mit der ersten Meßzelle verbunden ist, wird der Sauerstoffgehalt mittels eines zweiten Sauerstoff-Ionen-Pumpstroms weiter abgesenkt und NOₓ an einer Meßelektrode zersetzt. Der so erzeugte Sauerstoff wird als Maß für die NOₓ-Konzentration erfaßt. Der gesamte Meßaufnehmer wird dabei mittels eines elektrischen Heizers auf eine erhöhte Temperatur, z.B. 430°C, gebracht. Der Meßfehler des in dieser Veröffentlichung beschriebenen Meßaufnehmers entspricht einer NOₓ-Konzentration von 22ppm.

Dieser Meßfehler ist aus folgenden Gründen systematischer Natur: Zum Einstellen der ersten Sauerstoffkonzentration in der ersten Meßzelle fließt der Sauerstoff-Ionen-Pumpstrom Ip0 zwischen einer ersten Elektrode und einer Außenelektrode durch das Dickschichtmaterial, das in diesem Fall ein Festkörperelektrolyt aus ZrO₂ ist. Zwischen dem Festkörperelektrolyten ZrO₂ und der ersten Elektrode besteht ein Übergangswiderstand R, der vom Sauerstoff-Ionen-Pumpstrom Ip0 durchflossen wird. Der daraus entstehende Spannungsabfall wird bei der Bestimmung einer ersten Nernstspannung V0 in der ersten Meßzelle, die zur Regelung des ersten Sauerstoff-Ionen-Pumpstroms Ip0 verwendet wird, mitgemessen. Die gemessene Spannung V0 besteht also aus der eigentlichen Nernstspannung V_{N0} und dem beschriebenen additiven Spannungsabfall am Übergangswiderstand R0. Dies erschwert eine Regelung auf die erste Sauerstoffkonzentration in der ersten Meßzelle und führt zu einem systematischen Fehler, da bei einer zu niedrigen ersten Sauerstoffkonzentration unter Umständen an der ersten Elektrode bereits NOₓ zersetzt wird, das eigentlich erst in der zweiten Meßzelle zersetzt und gemessen werden sollte. Liegt die erste Sauerstoffkonzentration zu hoch, diffundiert zu viel Sauerstoff in die zweite Meßzelle, in der der Restsauerstoffgehalt dadurch zu hoch wird. Dies führt ebenfalls zu einer Verfälschung der NOₓ-Messung.

Bisher N. Kato et al., "Thick Film Noₓ Sensor for the Measurement of Low Noₓ Concentration", Society of Automotive Engineers, Veröffentlichung 98D170, 1998 wurde zur Lösung dieser Problematik die Tatsache verwendet, daß bei ideal eingestellter erster Sauerstoffkonzentration an der ersten Meßzelle der Sollwert für den zweiten Sauerstoff-Ionen-Pumpstrom Ip1, mit dem der zweite Sauerstoffgehalt in der zweiten Meßzelle eingestellt wird, bekannt ist. Dieser Sollwert für den zweiten Sauerstoff-Ionen-Pumpstrom Ip1 kann nun dazu verwendet werden, den Meßwert V0 der ersten Nernstspannung dahingehend zu korrigieren, daß der zweite Sauerstoff-Ionen-Pumpstrom Ip1 diesen Sollwert erreicht. Die dazu erforderliche Regelung kann jedoch aus Gründen der Stabilität nicht sehr schnell ausgelegt werden, so daß bei schnellen NOₓ-Konzentrationsänderungen im zu messenden Gas eine Kompensation nicht vollständig möglich ist. Dann wird die erste Sauerstoffkonzentration in der ersten Meßzelle nicht auf den gewünschten Wert geregelt, was wie beschrieben, zu Meßfehlern bei der Erfassung der NOₓ-Konzentration führt.

Aus EP 0816836 A2 ist es bekannt, eine vom ersten Pumpstrom abgeleitete Spannung in die Regelung des ersten Pumpstromes zur Korrektur eines Übergangswiderstandes einzubeziehen.

Es ist Aufgabe der vorliegende Erfindung, ein Verfahren anzugeben, mit dem die NOₓ-Konzentration in einem Gas unter Verwendung des oben beschriebenen Meßaufnehmers exakter erfaßt werden kann.

Die Aufgabe wird durch die Merkmale des Anspruchs 1 gelöst.

Erfindungsgemäß wird der Meßwert V0 der ersten Nernstspannung durch einen Regler korrigiert, der als Führungsgröße einen Sollwert Ip1ₛₒₗₗ des zweiten Sauerstoff-Ionen-Pumpstroms und als Regelgröße den aktuellen Wert des zweiten SauerstoffIonen Pumpstroms Ip1 verwendet und dadurch den Übergangswiderstand R0 zumindest teilweise durch einen Korrekturwert R0' annähert. Da der Übergangswiderstand R0 nur langsam veränderlichen Einflüssen unterworfen ist - hier sind insbesondere die Temperatur des Meßaufnehmers, die Temperatur des zu messenden Gases oder der Gasmassenstrom des zu messenden Gases zu nennen - kann dieser Regler so ausgelegt werden, daß er sehr langsam arbeitet, und dadurch sehr exakt ist. Der fälschlicherweise bei der Bestimmung der ersten Nernstspannung U_{N0} mitgemessene Spannungsabfall am Übergangswiderstand R0 zwischen Festkörperelektrolyt und erster Elektrode kann dann, da der erste Sauerstoff-Ionen-Pumpstrom Ip0 bekannt ist, durch das Produkt aus Korrekturwert R0' und Strom Ip0 korrigiert werden.

Der Vorteil dieser Vorgehensweise ist, daß nun auch bei schnellen dynamischen Änderungen im zu messenden Gas eine exakte Korrektur des Meßwertes V0 für die erste Nernstspannung möglich ist, da für die verschiedenen Betriebszustände ein einziger Korrekturwert R0' des Widerstandes R0 vorliegt. Schließlich wird der Korrekturwert R0' für den Widerstand nur zum Kompensieren einer langsamen Änderung verwendet. Damit wird die Meßgenauigkeit der NOₓ-Konzentration erhöht.

Vorteilhafte Ausgestaltungen der Erfindung sind in den Unteransprüchen gekennzeichnet.

Die Erfindung wird nachfolgend anhand eines Ausführungsbeispiels unter Bezugnahme auf die Zeichnung näher erläutert. Die Zeichnung zeigt:
- Fig. 1: eine schematische Darstellung einer Vorrichtung zum Ausführen des erfindungsgemäßen Verfahrens,
- Fig. 2: eine schematische Schnittdarstellung eines Meßaufnehmers, mit dem das erfindungsgemäße Verfahren ausgeführt wird, und
- Fig. 3: ein Blockschaltbild der bei Ausführung des Verfahrens ablaufenden Regelvorgänge.

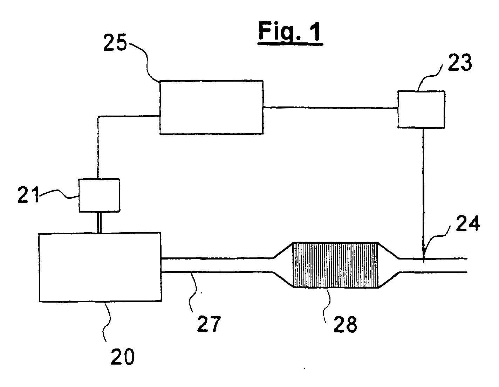

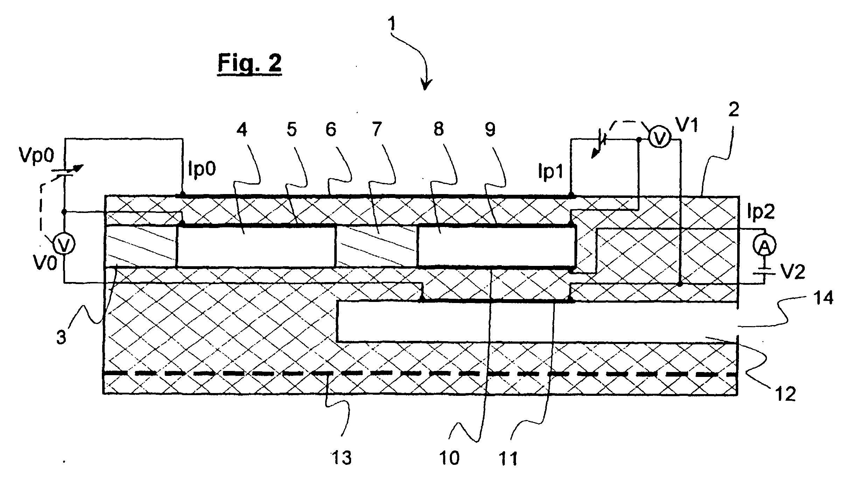

In Fig. 2 ist ein Schnitt durch einen NOₓ-Meßaufnehmer 1 schematisch dargestellt. Dieser Meßaufnehmer 1 wird in der in Fig. 1 dargestellten Vorrichtung als Meßaufnehmer 24 zur Bestimmung der NOₓ-Konzentration im Abgastrakt 27 einer Brennkraftmaschine 20 verwendet. Der NOₓ-Meßaufnehmer 24 wird von einer Steuereinheit 23 betrieben, die mit dem NOₓ-Meßaufnehmer 24 verbunden ist und die zum Betrieb des NOₓ-Meßaufnehmers 24 nötigen Regelvorgänge durchführt. Der von der Steuereinheit 23 gelieferte Meßwert der NOₓ-Konzentration wird über eine bidirektionale, digitale Schnittstelle dem Betriebssteuergerät 25 der Brennkraftmaschine 20 zugeführt, das ein Kraftstoffzuführsystem 21 der Brennkraftmaschine 20 so ansteuert, daß ein NOₓ-reduzierender Katalysator 28, der in diesem Fall stromauf des NOₓ-Meßaufnehmers 24 im Abgastrakt 27 liegt, optimales Betriebsverhalten zeigt.

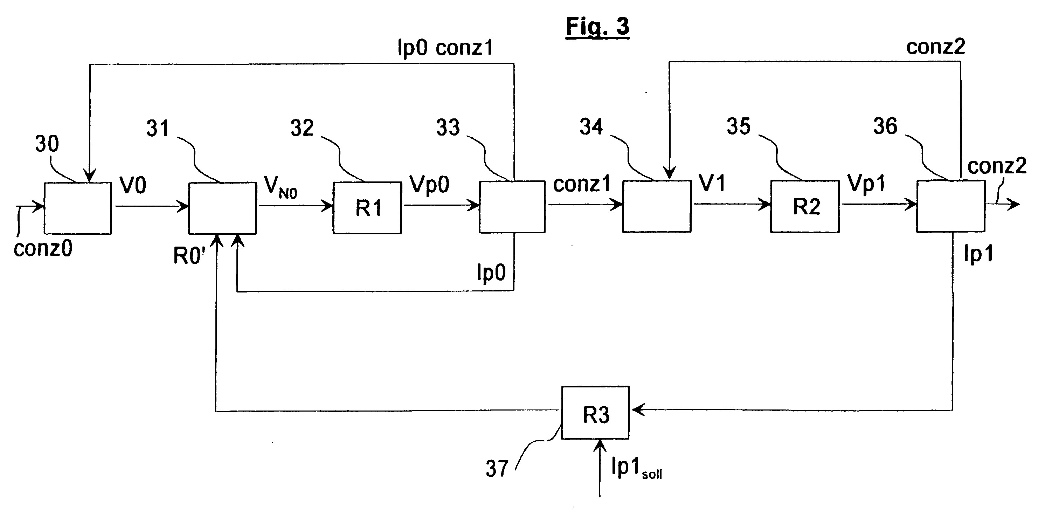

Der Meßaufnehmer 24, 1 ist in Fig. 2 detaillierter dargestellt. Die im Betrieb des NOₓ-Meßaufnehmers 1 ablaufenden Regelvorgänge sind im Blockschaltbild der Fig. 3 schematisch veranschaulicht. Der aus einem Festkörperelektrolyten 2, in diesem Fall ZrO₂, bestehende Meßaufnehmer 1 nimmt über eine Diffusionsbarriere 3 das zu messenden Abgas auf, das eine NOₓ-Konzentration conz0 hat. Das Abgas diffundiert durch die Diffusionsbarriere 3 in eine erste Meßzelle 4. Der Sauerstoffgehalt in dieser Meßzelle wird mittels einer ersten Nernstspannung V0 zwischen einer ersten Elektrode 5 und einer Umgebungsluft ausgesetzten Referenzelektrode 11 gemessen. Dabei ist die Referenzelektrode 11 in einem Luftkanal 12 angeordnet, in den über eine Öffnung 14 Umgebungsluft gelangt. Beide Elektroden 5, 11 sind herkömmliche Platinelektroden.

Im herkömmlichen Verfahren wird der Meßwert der ersten Nernstspannung V0 dazu verwendet, eine erste Stellspannung Vp0 einzustellen, was in Fig. 3 durch einen Block 30 angedeutet ist. Die Stellspannung Vp0 treibt einen ersten Sauerscoff-Ionen-Pumpstrom Ip0 durch den Festkörperelektrolyten 2 des Meßaufnehmers 1 zwischen der ersten Elektrode 5 und einer Außenelektrode 6 (Block 33 in Fig. 3). Dabei wird die Stellspannung Vp0 von einem Regler R1 so eingestellt, daß in der ersten Meßzelle 4 eine vorbestimmte Sauerstoffkonzentration conzl vorliegt (Block 32).

Die erste Meßzelle 4 ist mit einer zweiten Meßzelle 8 über eine weitere Diffusionsbarriere 7 verbunden. Durch diese Diffusionsbarriere 7 diffundiert das in der Meßzelle 4 vorhandene Gas in die zweite Meßzelle. Die zweite Sauerstoffkonzentration in der zweiten Meßzelle 8 wird über eine zweite Nernstspannung V1 zwischen einer zweiten Elektrode 9, die ebenfalls eine Platinelektrode ist, und der Referenzelektrode 11 gemessen (Block 34) und von einem Regler R2 (Block 35) zur Vorgabe einer zweiten Stellspannung Vp1 verwendet, die einen zweiten Sauerstoff-Ionen-Pumpstrom Ip1 treibt (Block 36). Der zweite Sauerstoff-Ionen-Pumpstrom Ip1 aus der zweiten Meßzelle fließt von der zweiten Elektrode 9 durch den Festkörperelektrolyten 2 zur Außenelektrode 6. Mit seiner Hilfe wird in der zweiten Meßzelle 8 eine vorbestimmte Sauerstoffkonzentration conz2 eingestellt (Ausgang Block 36).

Das von den bisherigen Vorgängen in den Meßzellen 4 und 8 nicht betroffene NOₓ wird nun an der Meßelektrode 10, die katalytisch wirksam ausgestaltet ist, unter Anlegen einer Spannung V2 zwischen der Meßelektrode 10 und der Referenzelektrode 11 zersetzt, und der freigewordene Sauerstoff wird durch den Festkörperelektrolyten 2 in einem dritten Sauerstoff-Ionen-Pumpstrom Ip2 zur Referenzelektrode 11 hin gepumpt. Der dritte Sauerstoff-Ionen-Pumpstrom Ip2 wird bei ausreichend geringem Restsauerstoffgehalt in der Meßzelle 8 nur von Sauerstoffionen getragen, die aus der Zersetzung von NOₓ stammen. Er ist somit ein Maß für die NOₓ-Konzentration in der Meßzelle 8 und somit im zu messenden Abgas.

Zur Regelung des ersten Sauerstoff-Ionen-Pumpstroms Ip0 durch den Regler R1 (Block 32) wird nach dem Stand der Technik direkt der Meßwert V0 der ersten Nernstspannung verwendet. Dieser ist jedoch, wie bereits dargelegt, durch einen Spannungsabfall an einem Übergangswiderstand R0 zwischen dem Festkörperelektrolyten 2 und der ersten Elektrode 5 verfälscht, da der Widerstand R0 vom ersten Sauerstoff-Ionen-Pumpstrom Ip0 durchflossen wird.

Erfindungsgemäß wird deshalb der Meßwert V0 der ersten Nernstspannung zuvor zur eigentlichen Nernstspannung V_{N0} korrigiert (Block 31), indem ein von einem Regler R3 (Block 37) gelieferter Wert R0' für den Widerstand R0 mit dem ersten Sauerstoff-Ionen-Pumpstrom Ip0 multipliziert und daraus der verfälschende Spannungsabfall berechnet wird. Der Regler R3 erhält als Führungsgröße den Sollwert Ip1ₛₒₗₗ des zweiten Sauerstoff-Ionen-Pumpstroms Ip1, der sich dann einstellen würde, wenn die erste Sauerstoffkonzentration in der ersten Meßzelle 4 ideal eingeregelt wäre. Eine allfällige Abweichung ist ja durch den Spannungsabfall am Widerstand R0 verursacht. Der Regler R3 kann dabei sehr langsam ausgelegt werden, da er nur Veränderungen des Übergangswiderstandes R0 selbst folgen soll, die von z.B. Konzentrationsänderungen der NOₓ-Eingangskonzentration conz0 unabhängig sind.

Vorteilhafterweise stellt der Regler R3 nur einen Teil des Korrekturwertes R0', zur Verfügung, der andere Teil, der mit dem vom Regler R3 gelieferten Teil multiplikativ oder additiv verknüpft werden kann, stammt aus einem Kennfeld, das von der Abgastemperatur, der Meßaufnehmertemperatur und dem Abgasmassenstrom abhängt, wobei nicht alle Abhängigkeiten ausgeführt sein müssen. Ist die Temperatur der ersten Meßzelle 4 gleich der der zweiten Meßzelle 8, spielt der Abgasmassenstrom keine Rolle mehr und der vom Regler R3 gelieferte Teil zum Bilden des Korrekturwertes R0' kann beispielsweise mit einem konstanten Wert verknüpft werden.

Der Vorteil dieser Vorgehensweise ist, daß auch bei schnellen dynamischen NOₓ-Konzentrationsänderungen im Abgas eine exakte Korrektur des Meßwertes V0 der ersten Nernstspannung möglich ist. Da der Regler R3 langsam ausgelegt werden kann, spielt er bei der Stabilitätsauslegung des Regiersystems keine Rolle.

## Patentansprüche

1. Verfahren zur Bestimmung der NOₓ-Konzentration in einem Gas, insbesondere dem Abgas einer Brennkraftmaschine, mittels eines einen Festkörperelektrolyten (2) aufweisenden Meßaufnehmers (1) mit:
- einer ersten Meßzelle (4), in die das Gas über eine Diffusionsbarriere (3) gelangt, in der die Sauerstoffkonzentration über eine erste Nernstspannung zwischen einer ersten Elektrode (5) und einer der Umgebungsluft ausgesetzten Referenzelektrode (11) gemessen und mittels eines ersten Sauerstoff-Ionen-Pumpstromes (Ip0) zwischen der ersten Elektrode (5) und einer Außenelektrode (6) auf eine erste Sauerstoffkonzentration geregelt wird, wobei der Meßwert (V0) der ersten Nernstspannung zur Regelung des ersten Sauerstoff-Ionen-Pumpstromes (Ip0) verwendet wird, und
- einer zweiten Meßzelle (8), die über eine Diffusionsbarriere (7) mit der ersten Meßzelle (4) verbunden ist und in der die Sauerstoffkonzentration über eine zweite Nernstspannung (V1) zwischen einer zweiten Elektrode (9) und der Referenzelektrode (11) gemessen und mittels eines zweiten Sauerstoff-Ionen-Pumpstromes (Ip1) zwischen der zweiten Elektrode (9) und der Außenelektrode (6) auf eine zweite Sauerstoffkonzentration geregelt wird, wobei
- die NOₓ-Konzentration mit einer Meßelektrode (10) in der zweiten Meßzelle (4) mitgemessen wird,
**dadurch gekennzeichnet, daß**
- zur Korrektur eines bei der Regelung des ersten Sauerstoff-Ionen-Pumpstromes (Ip0) auftretenden Fehlers der Meßwert (V0) der ersten Nernstspannung durch das Produkt eines Korrekturwertes (RO') und des ersten Sauerstoff-IonenPumpstroms (Ip0) korrigiert wird, wobei der einen Übergangswiderstand (R0) zwischen der ersten Elektrode (5) und dem Festkörperelektrolyten (2) annähernde Korrekturwert (RO') mindestens teilweise von einem Regler (R3) geliefert wird, der als Führungsgröße einen vorgegebenen Wert (Ip1ₛₒₗₗ) des zweiten Sauerstoff-Ionen-Pumpstromes und als Regelgröße den aktuellen Wert (Ip1) des zweiten Sauerstoff-Ionen-Pumpstromes verwendet.

2. Verfahren nach Anspruch 1, **dadurch gekennzeichnet, daß** die Annäherung des Übergangswiderstandes (R0) durch den Korrekturwert (R0')zum einen Teil vom Regler (R3) geliefert und zum anderen Teil aus einem Kennfeld entnommen wird, das von mindestens einer der folgenden Größen abhängt: Temperatur des Meßaufnehmers (1), Temperatur des zu messenden Gases, Massenstrom des zu messenden Gases.

3. Verfahren nach Anspruch 1, **dadurch gekennzeichnet, daß** der Übergangswiderstand (R0) durch einen Korrekturwert (RO') angenähert wird, der aus einem konstanten Wert und dem vom Regler (R3) gelieferten Wert zusammengesetzt wird.

4. Verfahren nach Anspruch 3, **dadurch gekennzeichnet, daß** der konstante Wert nur dann angenommen wird, wenn die Temperatur der zweiten Meßzelle (8) und die Temperatur der ersten Meßzelle (4) im wesentlichen gleich sind.

## Claims

1. Method for determining the NOₓ concentration in a gas, in particular the exhaust gas of an internal combustion engine, by means of a measuring sensor (1) having a solid electrolyte (2), with:
- a first measuring cell (4), into which the gas passes via a diffusion barrier (3), in which the oxygen concentration is measured via a first Nernst voltage between a first electrode (5) and a reference electrode (11), exposed to the ambient air, and is controlled to a first oxygen concentration by means of a first oxygen-ion pumping current (Ip0) between the first electrode (5) and an external electrode (6), the measured value (V0) of the first Nernst voltage being used for controlling the first oxygen-ion pumping current (Ip0), and
- a second measuring cell (8), which is connected to the first measuring cell (4) via a diffusion barrier (7) and in which the oxygen concentration is measured via a second Nernst voltage (V1) between a second electrode (9) and the reference electrode (11) and is controlled to a second oxygen concentration by means of a second oxygen-ion pumping current (Ip1) between the second electrode (9) and the external electrode (6),
- the NOₓ concentration being measured at the same time by a measuring electrode (10) in the second measuring cell (4),
**characterized in that**
- for correcting an error occurring in the control of the first oxygen-ion pumping current (Ip0), the measured value (V0) of the first Nernst voltage is corrected by the product of a correction value (R0') and the first oxygen-ion pumping current (Ip0), the correction value approximating a transitional resistance (R0) between the first electrode (5) and the solid electrolyte (2) being supplied at least partially by a controller (R3) which uses as the reference variable a prescribed value (Ip1ₛₑₜ) of the second oxygen-ion pumping current and as the controlled variable the current value (Ip1) of the second oxygen-ion pumping current.

2. Method according to Claim 1, **characterized in that** the approximation of the transitional resistance (R0) by the correction value (R0') is in one part supplied by the controller (R3) and in the other part taken from a characteristic map which depends on at least one of the following variables: temperature of the measuring sensor (1), temperature of the gas to be measured, mass flow of the gas to be measured.

3. Method according to Claim 1, **characterized in that** the transitional resistance (R0) is approximated by a correction value (R0') which is composed of a constant value and the value supplied by the controller (R3).

4. Method according to Claim 3, **characterized in that** the constant value is assumed only if the temperature of the second measuring cell (8) and the temperature of the first measuring cell, (4) are essentially equal.

## Revendications

1. Procédé pour déterminer la concentration des NOₓ dans un gaz, en particulier dans les gaz d'échappement d'un moteur à combustion interne, au moyen d'un capteur de mesure (1) comprenant un électrolyte solide (2), qui comprend :
- une première cellule de mesure (4) dans laquelle le gaz pénètre par l'intermédiaire d'une barrière de diffusion (3), et dans laquelle la concentration de l'oxygène est mesurée au moyen d'une première tension de Nemst apparaissant entre une première électrode (5) et une électrode de référence (11) exposée à l'air ambiant, et réglée sur une première concentration de l'oxygène au moyen d'un premier courant de pompage des ions oxygène (Ip0) entre la première électrode (5) et une électrode extérieure (6), la valeur mesurée (V0) de la première tension de Nemst étant utilisée pour la régulation du premier courant de pompage des ions oxygène (Ip0), et
- une deuxième cellule de mesure (8) qui est reliée à la première cellule de mesure (4) par l'intermédiaire d'une barrière de diffusion (7) et dans laquelle la concentration de l'oxygène est mesurée au moyen d'une deuxième tension de Nemst (V1) apparaissant entre une deuxième électrode (9) et l'électrode de référence (11), et réglée sur une deuxième concentration de l'oxygène au moyen d'un deuxième courant de pompage des ions oxygène (Ip1) entre la deuxième électrode (9) et l'électrode extérieure (6), où
- la concentration des NOₓ étant mesurée en même temps au moyen d'une électrode de mesure (10) dans la deuxième cellule de mesure (4),
**caractérisé en ce que**, pour la correction d'une erreur qui se produit dans la régulation du premier courant de pompage des ions oxygène (Ip0), la valeur mesurée (V0) de la première tension de Nemst est remplacée par le produit d'une valeur corrigée (R0') et du premier courant de pompage des ions oxygène (Ip0), la valeur corrigée (R0') qui est proche d'une résistance de contact (R0) entre la première électrode (5) et l'électrolyte solide (2) étant fournie au moins partiellement par un régulateur (R3) qui utilise une valeur prédéterminée (Iplₛₒₗₗ) du deuxième courant de pompage des ions oxygène comme variable de référence et la valeur actuelle (Ip1) du deuxième courant de pompage des ions oxygène comme variable réglée.

2. Procédé selon la revendication 1, **caractérisé en ce que** la valeur proche de la résistance de contact ( R0) donnée par la valeur corrigée (R0') est fournie, pour une partie, par le régulateur (R3) et, pour l'autre partie, par une table caractéristique qui dépend d'au moins une des grandeurs suivantes : température du capteur de mesure (1), température du gaz à mesurer, débit volumique du gaz à mesurer.

3. Procédé selon la revendication 1, **caractérisé en ce qu'**on prend pour valeur proche de la résistance de contact (R0) une valeur corrigée (R0') qui est composée d'une valeur constante et de la valeur fournie par le régulateur (R3).

4. Procédé selon la revendication 3, **caractérisé en ce que** la valeur constante n'est acceptée que lorsque la température de la deuxième cellule de mesure (8) et la température de la première cellule de mesure (4) sont sensiblement égales.
